# EUROPEAN PATENT SPECIFICATION

(11) **EP 4 585 496 B1**
(45) Date of publication and mention of the grant of the patent: **25.11.2026**
(21) Application number: 23870988.5
(22) Date of filing: 28.09.2023
(51) Int. Cl.: B62D 25/04, B62D 25/02, B62D 29/00

(54) **VEHICLE BODY SIDE REINFORCING STRUCTURE AND VEHICLE**
SEITENVERSTÄRKUNGSSTRUKTUR FÜR EINE FAHRZEUGKAROSSERIE UND FAHRZEUG
STRUCTURE DE RENFORCEMENT LATÉRAL DE CARROSSERIE DE VÉHICULE ET VÉHICULE

(30) Priority: 29.09.2022 CN 202211204578
(43) Date of publication of application: 16.07.2025
(73) Proprietor: Great Wall Motor Company Limited, Hebei 071000 (CN)
(72) Inventor: GAO, Peng, Baoding, Hebei 071000 (CN); ZHANG, Tao, Baoding, Hebei 071000 (CN); CHEN, Qiang, Baoding, Hebei 071000 (CN); ZHANG, Shuren, Baoding, Hebei 071000 (CN)
(74) Representative: Klunker IP Patentanwälte PartG mbB
(86) International application number: PCT/CN2023/122402
(87) International publication number: WO 2024/067763

(56) References cited:
- WO-A1-2015/037444
- CN-A- 110 962 938
- CN-A- 112 109 810
- CN-A- 114 889 706
- CN-U- 210 882 331
- CN-U- 214 296 140
- DE-A1- 102021 109 184
- JP-A- 2010 042 770
- JP-A- H08 276 864
- US-A- 2 389 907
- US-A1- 2016 200 364
- US-A1- 2016 257 344
- US-A1- 2017 327 154
- US-A1- 2021 155 306

## Description

### TECHNICAL FIELD

The invention relates to the field of vehicle body technology, and in particular, to a vehicle body side reinforcing structure. The invention also relates to a vehicle provided with the above-mentioned vehicle body side reinforcing structure.

### BACKGROUND

When a vehicle is involved in a collision, a body side structure of a vehicle body, as an important part of an entire vehicle body frame, has a crucial impact on safety of the vehicle during the collision. When the side structure of the vehicle body has good structural strength, not only deformation during the collision may be smaller so that intrusion into a passenger compartment may be reduced, but also a good force transmission channel may be formed on the vehicle body side, so that the collision force may be transmitted and dispersed. Therefore, in the development of the whole vehicle, how to improve the strength of the body side structure, thereby improving the collision performance of the vehicle and improving the quality of the whole vehicle, becomes particularly important.

CN 112 109 810 A discloses a rear body structure for application on a vehicle body having a C-pillar and a D-pillar. The rear body structure includes a rear wheel house inner panel and a rear wheel house outer panel connected by a rear shock absorber mounting, a first connecting portion extending from the D-pillar to a floor longitudinal beam, and a second connecting portion extending from the C-pillar to the floor longitudinal beam, the first and second connecting portions crossing at the rear shock absorber mounting and forming, together with the floor longitudinal beam, a triangular structure.

DE 10 2021 109 184 A1 discloses a trailing arm mounting structure for a space-frame vehicle, comprising a trailing arm mounting section configured to fasten a trailing arm, a sill having a rear portion at which the trailing arm mounting section is mounted, and a rear pillar connected to an upper rear portion of the sill.

US 2,389,907 A discloses a vehicle structure comprising a pair of longitudinal side rails connected by front and rear transverse cross members to form a rectangular underframe, a floor pan extending the length of the underframe, a pair of arched roof longitudinals extending lengthwise over the underframe and having their ends secured to the side rails, and uprights and door posts connecting the roof longitudinals to the side rails.

### SUMMARY

In view of this, it is an object of the invention to propose a vehicle body side reinforcing structure to improve structural strength of a body side structure, thereby improving quality of a whole vehicle, and a corresponding vehicle.

To achieve the above object, a technical solution of the invention is implemented with the features of independent claim 1 regarding the vehicle body side reinforcing structure, and with the features of the claim directed to the vehicle.

With the setting of the vehicle body side reinforcing structure on a vehicle, structural strength of the vehicle side is enhanced. Meanwhile, with the improvement of the structural strength of the vehicle side, overall quality of the whole vehicle may be improved, thus providing excellent practicality.

### BRIEF DESCRIPTION OF THE DRAWINGS

The accompanying drawings are used to provide further understanding of the invention. The illustrative drawings and their explanations are used to explain the invention and do not constitute improper limitations of the disclosure. The accompanying drawings are as follows.
FIG. 1 is a schematic diagram of an arrangement of a vehicle body side reinforcing structure in an entire vehicle.
FIG. 2 is a schematic diagram of a vehicle body side reinforcing structure.
FIG. 3 is a schematic diagram of an arrangement of a first reinforcing tube.
FIG. 4 is a schematic structural diagram of an A-pillar reinforcing plate and a roof side rail reinforcing plate.
FIG. 5 is a schematic structural diagram of an A-pillar upper reinforcing plate.
FIG. 6 is a schematic structural diagram of a first reinforcing tube.
FIG. 7 is a cross-sectional view at position A-A in FIG. 6.
FIG. 8 is a schematic diagram of an arrangement of a second reinforcing tube.
FIG. 9 is a schematic structural diagram of a B-pillar upper reinforcing plate.
FIG. 10 is a schematic structural diagram of a second reinforcing tube.
FIG. 11 is a schematic diagram of a part of a structure of a vehicle body side reinforcing structure.
FIG. 12 is a schematic diagram of connection between a D-pillar, a roof side rail and a rear floor longitudinal beam.
FIG. 13 is a cross-sectional view of a D-pillar.
FIG. 14 is a schematic diagram of an arrangement of a connecting piece.
FIG. 15 is a schematic structural diagram of a connecting piece.

### Description of reference numerals:

1. A-pillar; 2. roof side rail; 3. D-pillar; 4. rear floor longitudinal beam; 5. doorsill beam; 6. B-pillar; 7. C-pillar; 8. connecting piece; 9. first reinforcing tube; 10. second reinforcing tube; 11. C/D-pillar connecting cross member; 12. C/D-pillar connecting longitudinal beam; 13. rear wheel house; 14. parcel shelf connecting beam; 15. rear quarter window mounting panel; 16. parcel shelf;
101. A-pillar reinforcing plate; 102. A-pillar lower overlap edge; 103. A-pillar upper reinforcing plate; 104. A-pillar hinge reinforcing plate; 201. roof side rail reinforcing plate; 301. bulkhead; 401. front section of rear floor longitudinal beam; 401a. C-pillar overlap plate; 402. rear section of rear floor longitudinal beam; 403. overlap edge; 404. transitional surface;
601. B-pillar reinforcing plate; 602. B-pillar lower overlap edge; 603. B-pillar upper reinforcing plate; 604. B-pillar hinge reinforcing plate; 605. B-pillar upper overlap edge; 701. C-pillar upper section; 702. C-pillar lower section; 801. D-pillar connecting surface; 802. first connecting portion; 803. second connecting portion; 8031. side wall.

### DETAILED DESCRIPTION

In the following description, it should be noted that if terms indicating orientation or positional relationships such as "up", "down", "inside", "outside" appear, they are based on orientation or positional relationships shown in the accompanying drawings, only for the convenience of describing the present disclosure and simplifying the description, and do not indicate or imply that the device or component referred to must have a specific orientation, be constructed and operated in a specific orientation, and therefore cannot be understood as limiting. In addition, if terms such as "first" and "second" appear, they are only used for descriptive purposes and cannot be understood as indicating or implying relative importance.

In addition, in the description, unless otherwise explicitly limited, terms "installation", "connected", "joint", and "connector" should be understood in a broad sense. For example, they can refer to a fixed connection, a detachable connection, or an integrated connection; they can refer to a mechanical connection or an electrical connection; they can refer to a direct connection, an indirect connection through an intermediate medium, or internal connection between two components. For those skilled in the art, the specific meanings of the above terms may be understood in light of the specific circumstances.

In the following, a detailed explanation is provided with reference to the accompanying drawings.

The present invention relates to a vehicle body side reinforcing structure, which can enhance structural strength of a vehicle body side of a vehicle body and thereby improve safety in an event of a collision, contributing to improvement of overall quality of a whole vehicle.

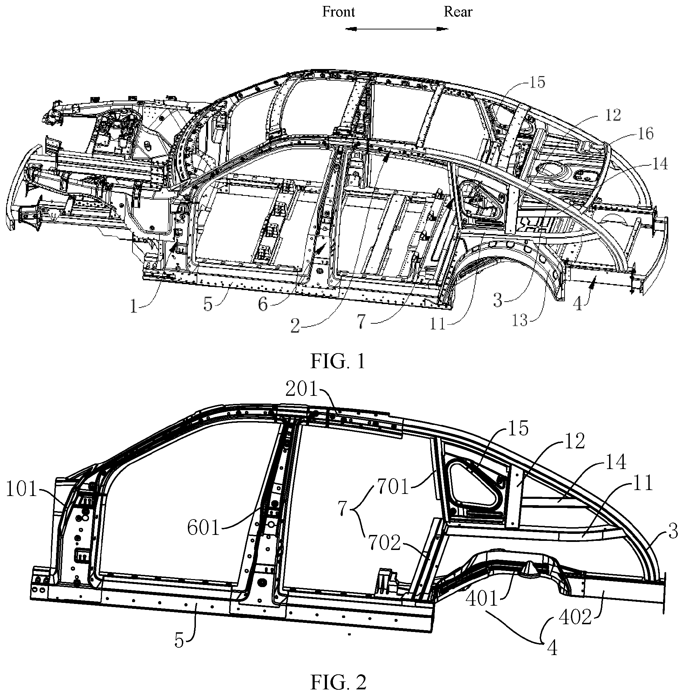

As a whole structure, as shown in FIG. 1 and FIG. 2, the vehicle body side reinforcing structure includes an A-pillar reinforcing plate 101 in an A-pillar 1, a B-pillar reinforcing plate 601 in a B-pillar 6, a roof side rail reinforcing plate 201 in a roof side rail 2, a doorsill beam 5, a C-pillar 7, a D-pillar 3, and a C/D-pillar connecting cross member 11.

The A-pillar reinforcing plate 101, the roof side rail reinforcing plate 201, and the D-pillar 3 are sequentially connected along a length direction of a vehicle body. The doorsill beam 5 is connected between a bottom end of the A-pillar reinforcing plate 101 and a front end of the rear floor longitudinal beam 4. A rear end of the D-pillar 3 is connected to a rear end of the rear floor longitudinal beam 4. The B-pillar reinforcing plate 601 is connected between a middle of the roof side rail reinforcing plate 201 and a middle of the doorsill beam 5. The C-pillar 7 is connected between a front end of the D-pillar 3 and a front end of the rear floor longitudinal beam 4. The C/D-pillar connecting cross member 11 is located at a top of a rear wheel house 13, arranged along the length direction of the vehicle body, and connected between the C-pillar 7 and the D-pillar 3.

Specifically, since structures on both sides of the vehicle body are generally symmetrical, FIG. 2 shows a reinforcing structure on a left side of the vehicle body.

Moreover, similar to a structure of an existing vehicle body, the A-pillar reinforcing plate 101, the B-pillar reinforcing plate 601, and the roof side rail reinforcing plate 201 are all located on outer sides of the A-pillar 1, the B-pillar 6, and the roof side rail 2. Meanwhile, specifically, the A-pillar reinforcing plate 101 is connected to an A-pillar inner panel located in the inner of the A-pillar reinforcing plate 101 to form the A-pillar 1 together. Similarly, the B-pillar 6 is formed of the B-pillar reinforcing plate 601 together with a B-pillar inner panel located in the inner of the B-pillar reinforcing plate 601. Likewise, the roof side rail 2 is formed of the roof side rail reinforcing plate 201 with a roof side rail inner panel located in the inner of the roof side rail reinforcing plate 201.

A structure connecting the A-pillar 1, the roof side rail 2, the B-pillar 6, as well as the C-pillar 7 and the doorsill beam 5 forms a main portion of a door frame and a sill on a side of a vehicle. Additionally, when combined with the D-pillar 3, the C/D-pillar connecting cross member 11, the C/D-pillar connecting longitudinal beam 12, and the parcel shelf connecting beam 14, a skeletal structure on a side of the vehicle is formed.

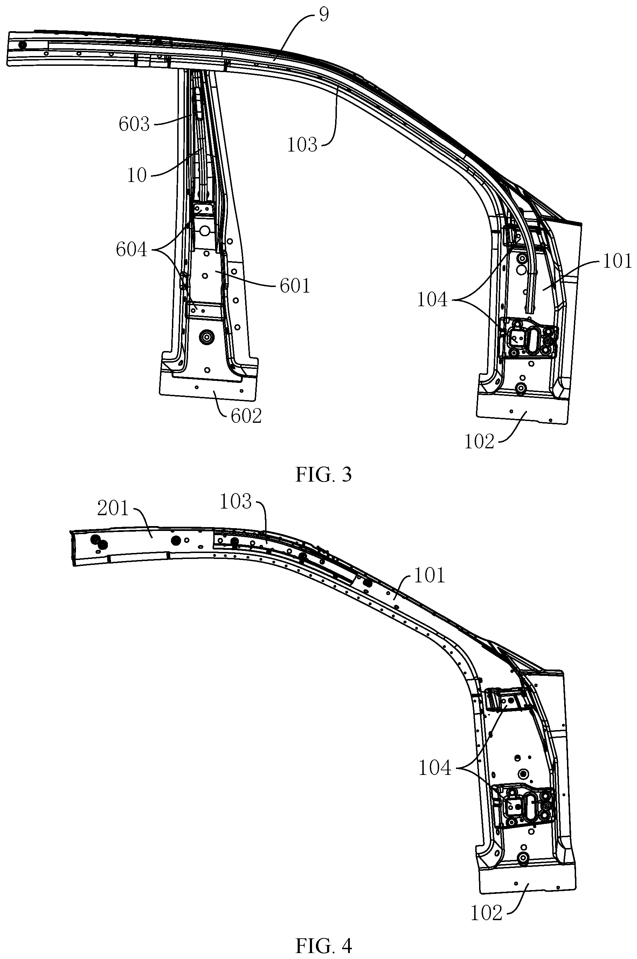

As a preferred implementation, referring to FIG. 3 and FIG. 4, cross-sections of the A-pillar reinforcing plate 101, the B-pillar reinforcing plate 601, and the roof side rail reinforcing plate 201 are all U-shaped, with outwardly turned edges on both sides. Thus, a cavity within the A-pillar 1 may be formed through a snap fit connection between the A-pillar inner panel and the A-pillar reinforcing plate 101; and a cavity within the B-pillar 6 may be formed through a snap fit connection between the B-pillar inner panel and the B-pillar reinforcing plate 601. Similarly, a cavity within the roof side rail 2 may be formed through a snap fit connection between the roof side rail reinforcing plate 201 and the roof side rail inner panel.

Structural strength of the A-pillar 1, the B-pillar 6, and the roof side rail 2 may be significantly enhanced with the formation of the cavity structure. In addition, as a preferred implementation, as shown in FIG. 3 and FIG. 4, a first reinforcing tube 9 is connected to an inner side of the A-pillar reinforcing plate 101, which faces toward the interior of the vehicle, and the first reinforcing tube 9 extends to an inner side of the roof side rail reinforcing plate 201, connecting with it.

Specifically, the first reinforcing tube 9 is located in the cavity formed in the A-pillar 1 and the roof side rail 2. Meanwhile, for better use, as shown in FIG. 3, a bottom end of the first reinforcing tube 9 is set close to a bottom end of the A-pillar 1, and a top end of the first reinforcing tube 9 is set close to the C-pillar 7. This arrangement allows the front end of the first reinforcing tube 9 to be arranged along the height direction of the vehicle body, so that the ability of the vehicle body to resist collisions during a head-on collision may be improved. Furthermore, as the middle and rear part of the first reinforcing tube 9 is located at the top of the vehicle body and arranged along the length direction of the vehicle body, the ability of the vehicle body side to resist top pressure may be improved.

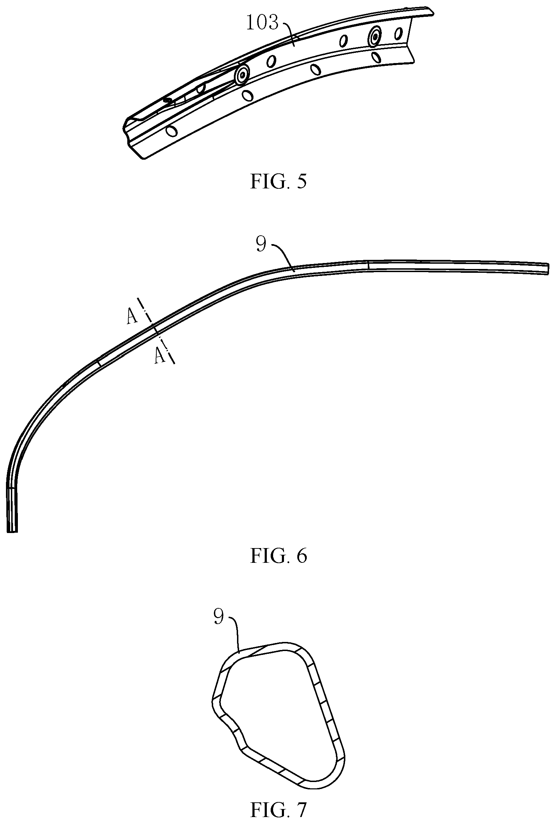

For better use, preferably, an upper part of the A-pillar reinforcing plate 101 is also provided with an A-pillar upper reinforcing plate 103 fixedly connected to a side of the first reinforcing tube 9. The A-pillar upper reinforcing plate 103 extends along the A-pillar reinforcing plate 101, and a rear end of the A-pillar upper reinforcing plate 103 extends to an inner side of the roof side rail reinforcing plate 201 and is connected to the roof side rail reinforcing plate 201. The structure of the A-pillar upper reinforcing plate 103 is specifically shown in FIG. 5, which is set in conformity with the A-pillar reinforcing plate 101, and its cross-section is also U-shaped. The A-pillar upper reinforcing plate 103 is closely connected with the A-pillar reinforcing plate 101 and the roof side rail reinforcing plate 201. By setting the A-pillar upper reinforcing plate 103, the reinforcement effect on the A-pillar 1 may be further improved. As the A-pillar upper reinforcing plate 103 extends to be connected with the roof side rail reinforcing plate 201, reliability of the connection between the A-pillar reinforcing plate 101 and the roof side rail reinforcing plate 201 may also be strengthened to improve stability of an overall structure of door ring of the vehicle body.

As an exemplary structure, the structure of the first reinforcing tube 9 is shown in FIG. 6 and FIG. 7, and its cross-section may be an irregular shape as shown in FIG. 7, or a regular circle or rectangle, etc. In addition, the cross-sections of the first reinforcing tube 9 at various positions may be the same, for example, all of which are circular, triangular, or rectangular. The first reinforcing tube 9 may also be divided into multiple sections, and the cross-section of at least one section is different from that of other sections. Thus, the mode of the first reinforcing tube 9 may be improved due to the change between the cross-sections. For example, a part of the first reinforcing tube 9 located on the inner side of the A-pillar reinforcing plate 101 may be set to a circular section, and a part located on the inner side of the roof side rail reinforcing plate 201 may be set to a rectangular section, and there is also a transition section for cross-section transition in the middle.

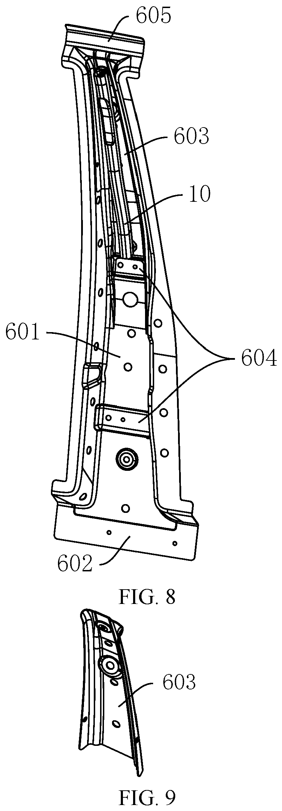

In addition to the setting of the first reinforcing tube 9 described above, as shown in FIG. 8, a second reinforcing tube 10 may also be connected to an inner side of the B-pillar reinforcing plate 601 and the second reinforcing tube 10 extends along a height direction of the B-pillar reinforcing plate 601. In addition, preferably, the second reinforcing tube 10 may also be specifically set close to the top end of the B-pillar reinforcing plate 601. For better reinforcement effect, the upper part of the B-pillar reinforcing plate 601 may also be provided with a B-pillar upper reinforcing plate 603 fixedly connected to a side of the second reinforcing tube 10.

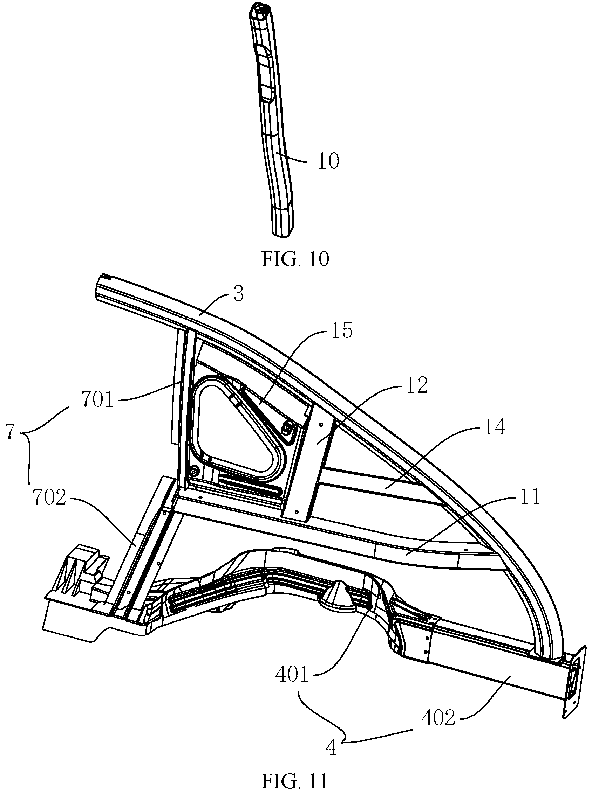

The structure of the B-pillar upper reinforcing plate 603 is specifically shown in FIG. 9, and its cross-section is also U-shaped. The B-pillar upper reinforcing plate 603 may be set in conformity with the B-pillar reinforcing plate 201, and may also be closely connected with the B-pillar reinforcing plate 601. The structure of the second reinforcing tube 10 is shown in FIG. 10, and its cross-section may be, as shown in FIG. 10, generally a regular circular or rectangular shape. Alternatively, the cross-section of the second reinforcing tube 10 may also adopt other cross-section design methods like the first reinforcing tube 9.

In specific implementation, the first reinforcing tube 9 and the second reinforcing tube 10 may both be made of one of hot-formed steel, aluminum alloy and fiber-reinforced composite materials. Moreover, as a preferred implementation, the first reinforcing tube 9 may be connected to the A-pillar reinforcing plate 101 and the roof side rail reinforcing plate 201 through Flow Drill Screw (FDS). Therein, FDS is specifically set as a plurality arranged at intervals along a length direction of the first reinforcing tube 9, and a specific quantity is not specifically limited here. Of course, in addition to using FDS to connect the first reinforcing tube 9 to the A-pillar reinforcing plate 101 and the roof side rail reinforcing plate 201, a blind rivet nut may also be provided on the first reinforcing tube 9, and the first reinforcing tube 9 may be connected to the A-pillar reinforcing plate 1 and the roof side rail reinforcing plate 201 through screw fasteners that cooperate with the blind rivet nut.

In addition, besides using the above two methods to connect the first reinforcing tube 9 with the A-pillar reinforcing plate 101 and the roof side rail reinforcing plate 201, the first reinforcing tube 9 may also be directly welded to the A-pillar reinforcing plate 101 and the roof side rail reinforcing plate 201. Alternatively, a mounting bracket may be welded on the first reinforcing tube 9, and the mounting bracket may be directly welded to the A-pillar reinforcing plate 101 and the roof side rail reinforcing plate 201, which may also realize the setting of the first reinforcing tube 9. In specific implementation, the above multiple connection methods may also be combined arbitrarily, as long as the first reinforcing tube 9 may be firmly set on the A-pillar reinforcing plate 101 and the roof side rail reinforcing plate 201.

It should be pointed out that for the connection of the second reinforcing tube 10 on the B-pillar reinforcing plate 601, reference may be made to the connection method of the first reinforcing tube 9 mentioned above. Furthermore, in order to facilitate installation of a vehicle door, the inner side of the A-pillar reinforcing plate 101 may also be provided with an A-pillar hinge installation reinforcing plate 104, and the inner side of the B-pillar reinforcing plate 601 may also be provided with a B-pillar hinge reinforcing plate 604. It can be understood that by setting the above-mentioned A-pillar hinge installation reinforcing plate 104 and B-pillar hinge installation reinforcing plate 604, the structural strength of the A-pillar reinforcing plate 101 and the B-pillar reinforcing plate 601 may also be improved.

In addition, in order to facilitate the connection, the bottom end of the A-pillar reinforcing plate 101 is formed with an A-pillar lower overlap edge 102. Meanwhile, the bottom end of the B-pillar reinforcing plate 601 is formed with a B-pillar lower overlap edge 602, and the top end of the B-pillar reinforcing plate 601 is formed with a B-pillar upper overlap edge 605. The A-pillar lower overlap edge 102 and the B-pillar lower overlap edge 602 are used to connect with the doorsill beam 5 through FDS connection method in specific implementation. The B-pillar upper overlap edge 605 is used to connect with the roof side rail reinforcing plate 201 through spot welding connection. Meanwhile, in specific implementation, the above-mentioned A-pillar lower overlap edge 102, B-pillar lower overlap edge 602 and B-pillar upper overlap edge 605 may also be tempered to improve the reliability of the connection.

It can be understood that by setting the above two reinforcing tubes, the structural strength of the A-pillar reinforcing plate 101, the roof side rail reinforcing plate 201 and the B-pillar reinforcing plate 601 may be improved by the reinforcing tubes. The reinforcing tubes are made of one of hot-formed steel, aluminum alloy and fiber-reinforced composite materials, which may also ensure the use effect of the reinforcing tubes. In addition, the bottom end of the first reinforcing tube 9 is set close to the bottom end of the A-pillar reinforcing plate 101, and its top end is set close to the C-pillar 7, and the second reinforcing tube 10 is set close to the top end of the B-pillar reinforcing plate 601, which can also improve ability for protecting occupants under conditions of vehicle collision or top pressure.

As shown in FIG. 2, in order to facilitate the preparation of the C-pillar 7, especially to meet styling requirements of the C-pillar 7 to reduce its design difficulty, as a preferred implementation, the C-pillar 7 made of extruded aluminum profiles also specifically includes a C-pillar upper section 701 and a C-pillar lower section 702 connected to each other. Therein, the C-pillar upper section 701 is located above the C/D-pillar connecting cross member 11, and a top end of the C-pillar upper section 701 is connected with the D-pillar 3. The C-pillar lower section 702 is located below the C/D-pillar connecting cross member 11, and a bottom end of the C-pillar lower section 702 is connected with the front end of the rear floor longitudinal beam 4. Meanwhile, the C-pillar upper section 701 and the C-pillar lower section 702 are also connected to the C/D-pillar connecting cross member 11 respectively.

It should be noted that, in specific implementation, preferably, connections between the C-pillar upper section 701 and the C-pillar lower section 702, between the C-pillar upper section 701 and the C/D-pillar connecting cross member 11, and between the C-pillar lower section 702 and the C/D-pillar connecting cross member 11 may be implemented by Melt Inert-gas Welding (MIG welding). And connections between the C-pillar upper section 701 and the D-pillar 3, and between the C-pillar lower section 702 and the rear floor longitudinal beam 4, may also be implemented by MIG welding. The connection using MIG welding is simple and can ensure the connection effect. However, in addition to MIG welding, other conventional methods may of course also be used to connect the above-mentioned components.

As shown in FIG. 1, FIG. 2 and in conjunction with FIG. 11, as a preferred implementation, the vehicle body side reinforcing structure may also include a C/D-pillar connecting longitudinal beam 12. The C/D-pillar connecting longitudinal beam 12 is connected between the D-pillar 3 and the C/D-pillar connecting cross member 11. Through the setting of the C/D-pillar connecting longitudinal beam 12, the C-pillar upper section 701, the D-pillar 3, the C/D-pillar connecting longitudinal beam 12 and the C/D-pillar connecting cross member 11 are also connected to form a ring structure, and a rear quarter window mounting panel 15 used for mounting of a rear quarter window is fixedly connected in a space defined by the ring structure.

In addition, and also as a preferred implementation, the vehicle body side reinforcing structure may further include a parcel shelf connecting beam 14. The parcel shelf connecting beam 14 extends along the length direction of the vehicle. A front end of the parcel shelf connecting beam 14 is connected to the C/D-pillar connecting longitudinal beam 12, and a rear end of the parcel shelf connecting beam 14 is connected to the D pillar 3.

By setting the parcel shelf connecting beam 14, the structural strength of the vehicle body side near the rear of the vehicle may be further improved. In the specific implementation, it should be noted that in the vehicle, a parcel shelf rear cross member is also connected between two D pillars 2, and meanwhile, a parcel shelf front cross member is also connected between two C/D-pillar connecting longitudinal beams 12. Thus, through a ring-shaped frame composed of the parcel shelf rear cross member and the parcel shelf front cross member oppositely arranged, and the parcel shelf connecting beams 14 on both sides, a parcel shelf 16 may be arranged at the rear of the vehicle stably.

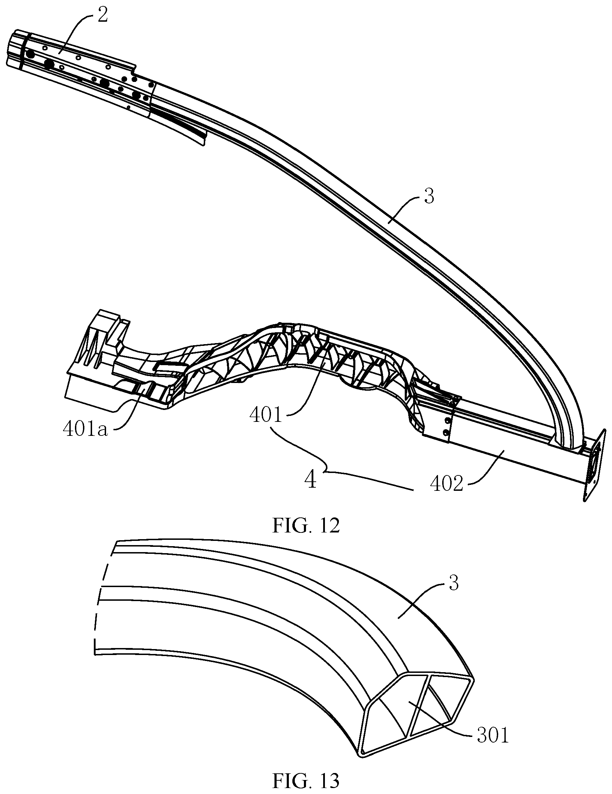

As a preferred implementation, as shown in FIG. 12 and FIG. 13, an outer contour of a cross section of D-pillar 3 is configured to be a closed ring. Furthermore, a bulkhead 301 is also integrally formed in the D-pillar 3, and the bulkhead 301 extends from the bottom end of the D-pillar 3 to the top end of the D-pillar 3. Thus, the outer contour of the D-pillar 3 is a closed ring, and the structural strength of the D-pillar 3 may be improved with a characteristic of high structural strength of a closed cavity. The setting of the bulkhead 301 in the D-pillar 3 may also further improve the overall structural strength of the D-pillar 3.

Based on the closed ring cross section of the D-pillar 3, it is preferred that in a specific implementation two ends of the D-pillar 3 may be sealed with foam glue or structural glue. Through sealing, water or other sundries may be prevented from entering the D-pillar 3, and meanwhile structural strength of the two ends of the D-pillar 3 may be improved by the sealing to improve connection reliability between the D-pillar 3 and the roof side rail 2 and the rear floor longitudinal beam 4.

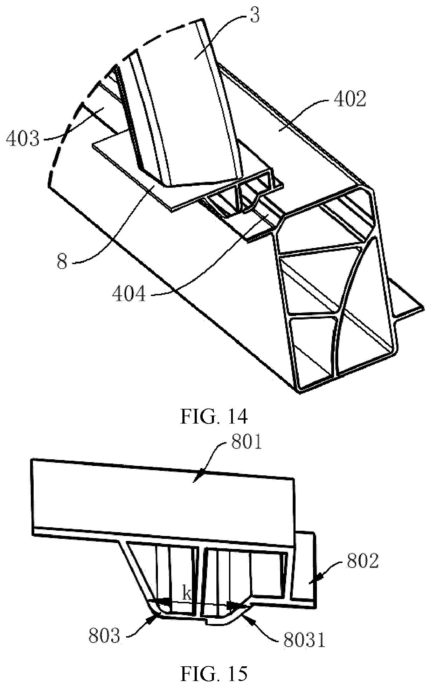

As a preferred implementation, the top end of the D-pillar 3 is lapped on the roof side rail 2, and may be fixedly connected with the roof side rail reinforcing plate 201 and a roof side rail inner plate in the roof side rail 2 through FDS. FDS may facilitate the connection between the D-pillar 3 and the roof side rail 2 and may ensure the connection effect. Regarding a connection between the D-pillar 3 and the rear floor longitudinal beam 4, as a preferred implementation, with reference with FIG. 12 and FIG. 14, the bottom end of the D-pillar 3 is specifically connected to the rear floor longitudinal beam 4 through a connecting piece 8. The setting of the connecting piece 8 may facilitate the connection between the D-pillar 3 and the rear floor longitudinal beam 4, and may also ensure the connection effect between the two.

Therein, as a preferred implementation, the rear floor longitudinal beam 4 specifically includes a front section of the rear floor longitudinal beam 401, and a rear section of the rear floor longitudinal beam 402 connected to a rear end of the front section of the rear floor longitudinal beam 401. The front section of the rear floor longitudinal beam 401 may be die-cast into shape, and the rear section of the rear floor longitudinal beam 402 may be made of extruded aluminum profiles, so as to facilitate the preparation of the rear floor longitudinal beam 4 and ensure its structural strength. Meanwhile, it may also be facilitated to adjust an overall length of the rear floor longitudinal beam 4.

Moreover, a C-pillar overlap plate 401a is formed at a front end of the front section of the rear floor longitudinal beam 401, and a lower section of the C-pillar 702 is specifically connected to the C-pillar overlap plate 401a. The rear end of the doorsill beam 5 may be lapped on a connection surface formed at the front end of the front section of the rear floor 401, and connected by FDS. The front section of the rear floor longitudinal beam 401and the rear section of the rear floor longitudinal beam 402 may be fixedly connected by FDS or screws.

In this implementation, the rear end of the D-pillar 3 is specifically connected to the rear section of the rear floor longitudinal beam 402. In order to facilitate the connection between the D-pillar 3 and the rear section of the rear floor longitudinal beam 402, the D-pillar 3 is also specifically connected to the rear section of the rear floor longitudinal beam 402 through the connecting piece 8. At this time, the connecting piece 8 may preferably be made of extruded aluminum profiles, and the D-pillar 3 and the connecting piece 8 may be connected by MIG welding, and the connecting piece 8 and the rear section of the rear floor longitudinal beam 402 may also be connected by MIG welding. Thus, the connecting piece 8 may be made of extruded aluminum profiles, which may facilitate its preparation, and also may ensure structural strength of the connecting piece 8. The connection between the D-pillar 3 and the connecting piece 8, and between the connecting piece 8 and the rear section of the rear floor longitudinal beam 402, through MIG welding has advantages of simple connection method and good connection effect.

In this implementation, as shown in FIG. 14 and FIG. 15, as a preferred implementation form, an outer side of the rear section of the rear floor longitudinal beam 402 is provided with an overlap edge 403 extending outward along the width direction of the vehicle. The overlap edge 403 is also located near the top of the rear section of the rear floor longitudinal beam 402, and an upper surface of the overlap edge 403 is connected to an upper surface of the rear section of the rear floor longitudinal beam 402 through an inclined transitional surface 404.

The bottom end of the D-pillar 3 is connected to the top of the connecting piece 8, and specifically, is connected by MIG welding to a D-pillar connecting surface 801 on the connecting piece 8. In addition, the bottom of the connecting piece 8 includes a first connecting part 802 that laps with the upper surface of the rear floor longitudinal beam 4, and a second connecting part 803 that laps with the upper surface of the overlap edge 403.

A width k of the second connecting part 803 in the width direction of the vehicle is gradually reduced from top to bottom, so that the second connecting part 803 as a whole is similar to a "V"-shaped structure with a flat bottom. At the same time, one side of the second connecting part 803, that is, side wall a 8031 on a side, closer to the transitional surface 404 of the second connecting part 803, also laps with the transitional surface 404.

After the various parts of the connecting piece 8 are overlapped with the rear floor longitudinal beam rear section 402 and the overlap edge 403 thereon respectively, the connecting piece 8 and the rear section of the rear floor longitudinal beam 402 may be fixedly connected together by MIG welding. In this implementation, the connection strength between the connecting piece 8 and the rear section of the rear floor longitudinal beam 402 may be improved by setting the overlap edge 403 on the rear section of the rear floor longitudinal beam 402 and making the width k of the second connecting part 803 on the connecting piece 8 decrease gradually, thereby ensuring connection reliability between the D-pillar 3 and the rear floor longitudinal beam 4.

Of course, in addition to the above-mentioned connection methods, other conventional connection methods in the existing automobile production field may also be used for any connection between the D-pillar 3 and the roof side rail 2, as well as between the D-pillar 3 and the rear floor longitudinal beam 4, and even between the D-pillar 3 and the connecting piece 8, and between the connecting piece 8 and the rear floor longitudinal beam 4, as long as the connection between each other may be realized and the connection effect may be ensured.

It is worth mentioning that, in specific implementation, preferably, the A-pillar reinforcing plate 101, the B-pillar reinforcing plate 601, and the roof side rail reinforcing plate 201 in this implementation are all made of hot-formed steel plates. The C-pillar 7, which is composed of the C-pillar upper section 701 and the C-pillar lower section 702, as well as the doorsill beam 5, the D-pillar 3, the C/D-pillar connecting cross member 11, the C/D-pillar connecting longitudinal beam 12, the parcel shelf connecting beam 14, the parcel shelf front/rear cross member, etc., are all made of extruded aluminum profiles.

Thus, the A-pillar reinforcing plate 101, the B-pillar reinforcing plate 601, and the roof side rail reinforcing plate 201 are made of hot-formed steel plates, and the C-pillar 7, the D-pillar 3, the doorsill beam 5, the C/D-pillar connecting cross member 11, the C/D-pillar connecting longitudinal beam 12, the parcel shelf connecting beam 14, etc. are made of extruded aluminum profiles. The strength of each reinforcing plate structure may be ensured with characteristics of high structural strength of hot-formed steel plates and extruded aluminum profiles. Meanwhile, based on the high structural strength of hot-formed steel plates, the reinforcing plates may also adopt a smaller plate thickness. With characteristics of light weight of the extruded aluminum profile, it is also beneficial to reduce a weight of each beam, thereby contributing to a lightweight design of the entire vehicle.

The vehicle body side reinforcing structure, through the arrangement of the A-pillar reinforcing plate 101, the B-pillar reinforcing plate 601, the roof side rail reinforcing plate 201, the doorsill beam 5, the C-pillar 7, the D-pillar 3, the C/D-pillar connecting cross member 11, the C/D-pillar connecting longitudinal beam 12, the parcel shelf connecting beam 14, etc., and through the connection between them, a multi-ring reinforcing structure may be formed on the vehicle body side. Various ring structures in the multi-ring reinforcing structure are also connected to each other, which also makes the components jointly form a grid-like reinforcement skeleton on the vehicle body side. Therefore, the structural strength of the vehicle body side may be improved. With the improvement of the structural strength of the vehicle body side, quality of the whole vehicle may be improved, and the whole vehicle may have a good practicality.

Finally, the invention also relates to a vehicle. The vehicle body of the vehicle is provided with the vehicle body side reinforcing structure as described above.

Moreover, structural strength of the vehicle of this embodiment may be improved by setting the above-mentioned vehicle body side reinforcing structure. With the improvement of the structural strength of the vehicle body side, quality of the whole vehicle may be improved, and the whole vehicle may have a good practicality.

## Claims

1. A vehicle body side reinforcing structure, comprising:
an A-pillar (1) comprising an A-pillar reinforcing plate (101), a B-pillar (6) comprising a B-pillar reinforcing plate (601), a roof side rail (2) comprising a roof side rail reinforcing plate (201), a doorsill beam (5), a C-pillar (7), a D-pillar (3) and a C/D-pillar connecting cross member (11);
wherein the A-pillar reinforcing plate (101), the roof side rail reinforcing plate (201) and the D-pillar (3) are sequentially connected in a length direction of a vehicle body, the doorsill beam (5) is connected between a bottom end of the A-pillar reinforcing plate (101) and a front end of a rear floor longitudinal beam (4), and a rear end of the D-pillar (3) is connected to a rear end of the rear floor longitudinal beam (4);
the B-pillar reinforcing plate (601) is connected between a middle of the roof side rail reinforcing plate (201) and a middle of the doorsill beam (5), the C-pillar (7) is connected between a front end of the D-pillar (3) and a front end of the rear floor longitudinal beam (4), and the C/D-pillar connecting cross member (11) is arranged in the length direction of the vehicle body, and is connected between the C-pillar (7) and the D-pillar (3);
wherein the vehicle body side reinforcing structure further comprises:
a C/D-pillar connecting beam (12) made of extruded aluminum profiles, wherein the C/D-pillar connecting beam (12) is arranged in a height direction of a vehicle body and is connected between the D-pillar (3) and the C/D-pillar connecting cross member (11); and
a parcel shelf connecting beam (14) made of extruded aluminum profiles, wherein the parcel shelf connecting beam (14) extends along a length direction of the vehicle body, and a front end of the parcel shelf connecting beam (14) is connected to the C/D-pillar connecting beam (12), and a rear end of the parcel shelf connecting beam (14) is connected to the D-pillar (3).

2. The vehicle body side reinforcing structure according to claim 1, wherein
a first reinforcing tube (9) is connected to an inner side of the A-pillar reinforcing plate (101), and the first reinforcing tube (9) extends to an inner side of the roof side rail reinforcing plate (201) and is connected to the roof side rail reinforcing plate (201).

3. The vehicle body side reinforcing structure according to claim 2, wherein
a second reinforcing tube (10) is connected to an inner side of the B-pillar reinforcing plate (601), and the second reinforcing tube (10) extends in a height direction of the B-pillar reinforcing plate (601).

4. The vehicle body side reinforcing structure according to claim 3, wherein
a bottom end of the first reinforcing tube (9) is arranged close to a bottom end of the A-pillar reinforcing plate (101), and a top end of the first reinforcing tube (9) is arranged close to the C-pillar (7); and/or
the second reinforcing tube (10) is arranged close to a top end of the B-pillar reinforcing plate (601).

5. The vehicle body side reinforcing structure according to claim 3, wherein
the first reinforcing tube (9) and the second reinforcing tube (10) are both made of one of hot-formed steel, aluminum alloy and fiber-reinforced composite material; and/or,
a cross-section at each position of the first reinforcing tube (9) is the same, or the first reinforcing tube (9) is divided into a plurality of sections, and a cross-section of at least one section is different from that of other sections.

6. The vehicle body side reinforcing structure according to claim 4, wherein
an upper section of the A-pillar reinforcing plate (101) is provided with an A-pillar upper reinforcing plate (103) fixedly connected to a side of the first reinforcing tube (9), the A-pillar upper reinforcing plate (103) extends along the A-pillar reinforcing plate (101), and a rear end of the A-pillar upper reinforcing plate (103) extends into the roof side rail reinforcing plate (201) and is connected to the roof side rail reinforcing plate (201); and
an upper section of the B-pillar reinforcing plate (601) is provided with a B-pillar upper reinforcing plate (603) fixedly connected to a side of the second reinforcing tube (10).

7. The vehicle body side reinforcing structure according to claim 1, wherein
the C-pillar (7) comprises a C-pillar upper section (701) and a C-pillar lower section (702) that are connected;
the C-pillar upper section (701) is located above the C/D-pillar connecting cross member (11) and is connected to the D-pillar (3), and the C-pillar lower section (702) is located below the C/D-pillar connecting cross member (11) and is connected to the rear floor longitudinal beam (4).

8. The vehicle body side reinforcing structure according to claim 1, wherein
an outer contour of a cross-section of the D-pillar (3) is a closed ring; a bulkhead (301) is integrally formed inside the D-pillar (3), the bulkhead (301) extends from a bottom end of the D-pillar (3) to a top end of the D-pillar (3); and/or
both ends of the D-pillar (3) are sealed with foam glue or structural glue.

9. The vehicle body side reinforcing structure according to claim 1, wherein
a bottom end of the D-pillar (3) is connected to the rear floor longitudinal beam (4) through a connecting piece (8), and the connecting piece (8) is made of extruded aluminum profile.

10. The vehicle body side reinforcing structure according to claim 9, wherein
an outer side of the rear floor longitudinal beam (4) is provided with an overlap edge (403) extending outward along a width direction of a vehicle, the overlap edge (403) is arranged close to a top end of the rear floor longitudinal beam (4), and an upper surface of the overlap edge (403) is connected to an upper surface of the rear floor longitudinal beam (4) through an inclined transitional surface (404).

11. The vehicle body side reinforcing structure according to claim 10, wherein
a bottom end of the D-pillar (3) is connected to a top end of the connecting piece (8), a bottom of the connecting piece (8) has a first connecting portion (802) lapped on the upper surface of the rear floor longitudinal beam (4), and a second connecting portion (803) lapped on an upper surface of the overlap edge (403), and a width of the second connecting portion (803) in the width direction of the vehicle is gradually reduced from top to bottom, and a side of the second connecting portion (803) is lapped on the transitional surface (404).

12. The vehicle body side reinforcing structure according to any one of claims 1 to 11, wherein
the A-pillar reinforcing plate (101), the B-pillar reinforcing plate (601) and the roof side rail reinforcing plate (201) are made of hot-formed steel plates, the C-pillar (7), the doorsill beam (5), the D-pillar (3) and the C/D-pillar connecting cross member (11) are made of extruded aluminum profiles.

13. A vehicle, wherein a body of the vehicle is provided with the vehicle body side reinforcing structure according to any one of claims 1 to 12.

## Patentansprüche

1. Fahrzeugkarosserieseiten-Verstärkungsstruktur, aufweisend:
eine A-Säule (1), die eine A-Säulen-Verstärkungsplatte (101) aufweist, eine B-Säule (6), die eine B-Säulen-Verstärkungsplatte (601) aufweist, einen Dachseitenholm (2), der eine Dachseitenholm-Verstärkungsplatte (201) aufweist, einen Türschwellenträger (5), eine C-Säule (7), eine D-Säule (3) und einen C/D-Säulen-Verbindungsquerträger (11);
wobei die A-Säulen-Verstärkungsplatte (101), die Dachseitenholm-Verstärkungsplatte (201) und die D-Säule (3) in einer Längsrichtung einer Fahrzeugkarosserie nacheinander verbunden sind, der Türschwellenträger (5) zwischen einem unteren Ende der A-Säulen-Verstärkungsplatte (101) und einem vorderen Ende eines Hinterbodenlängsträgers (4) verbunden ist und ein hinteres Ende der D-Säule (3) mit einem hinteren Ende des Hinterbodenlängsträgers (4) verbunden ist;
die B-Säulen-Verstärkungsplatte (601) zwischen einer Mitte der Dachseitenholm-Verstärkungsplatte (201) und einer Mitte des Türschwellenträgers (5) verbunden ist, die C-Säule (7) zwischen einem vorderen Ende der D-Säule (3) und einem vorderen Ende des Hinterbodenlängsträgers (4) verbunden ist und der C/D-Säulen-Verbindungsquerträger (11) in der Längsrichtung der Fahrzeugkarosserie angeordnet und zwischen der C-Säule (7) und der D-Säule (3) verbunden ist;
wobei die Fahrzeugkarosserieseiten-Verstärkungsstruktur ferner aufweist:
einen C/D-Säulen-Verbindungsträger (12), der aus stranggepressten Aluminiumprofilen gefertigt ist, wobei der C/D-Säulen-Verbindungsträger (12) in einer Höhenrichtung einer Fahrzeugkarosserie angeordnet und zwischen der D-Säule (3) und dem C/D-Säulen-Verbindungsquerträger (11) verbunden ist; und
einen Hutablagen-Verbindungsträger (14), der aus stranggepressten Aluminiumprofilen gefertigt ist, wobei sich der Hutablagen-Verbindungsträger (14) entlang einer Längsrichtung der Fahrzeugkarosserie erstreckt und ein vorderes Ende des Hutablagen-Verbindungsträgers (14) mit dem C/D-Säulen-Verbindungsträger (12) verbunden ist und ein hinteres Ende des Hutablagen-Verbindungsträgers (14) mit der D-Säule (3) verbunden ist.

2. Fahrzeugkarosserieseiten-Verstärkungsstruktur nach Anspruch 1, wobei
ein erstes Verstärkungsrohr (9) mit einer Innenseite der A-Säulen-Verstärkungsplatte (101) verbunden ist und sich das erste Verstärkungsrohr (9) zu einer Innenseite der Dachseitenholm-Verstärkungsplatte (201) erstreckt und mit der Dachseitenholm-Verstärkungsplatte (201) verbunden ist.

3. Fahrzeugkarosserieseiten-Verstärkungsstruktur nach Anspruch 2, wobei
ein zweites Verstärkungsrohr (10) mit einer Innenseite der B-Säulen-Verstärkungsplatte (601) verbunden ist und sich das zweite Verstärkungsrohr (10) in einer Höhenrichtung der B-Säulen-Verstärkungsplatte (601) erstreckt.

4. Fahrzeugkarosserieseiten-Verstärkungsstruktur nach Anspruch 3, wobei
ein unteres Ende des ersten Verstärkungsrohrs (9) nahe einem unteren Ende der A-Säulen-Verstärkungsplatte (101) angeordnet ist und ein oberes Ende des ersten Verstärkungsrohrs (9) nahe der C-Säule (7) angeordnet ist; und/oder
das zweite Verstärkungsrohr (10) nahe einem oberen Ende der B-Säulen-Verstärkungsplatte (601) angeordnet ist.

5. Fahrzeugkarosserieseiten-Verstärkungsstruktur nach Anspruch 3, wobei
das erste Verstärkungsrohr (9) und das zweite Verstärkungsrohr (10) beide aus einem von warmumgeformtem Stahl, Aluminiumlegierung und faserverstärktem Verbundwerkstoff gefertigt sind; und/oder,
ein Querschnitt an jeder Position des ersten Verstärkungsrohrs (9) gleich ist oder das erste Verstärkungsrohr (9) in eine Mehrzahl von Abschnitten unterteilt ist und ein Querschnitt mindestens eines Abschnitts von demjenigen der anderen Abschnitte verschieden ist.

6. Fahrzeugkarosserieseiten-Verstärkungsstruktur nach Anspruch 4, wobei
ein oberer Abschnitt der A-Säulen-Verstärkungsplatte (101) mit einer oberen A-Säulen-Verstärkungsplatte (103) versehen ist, die fest mit einer Seite des ersten Verstärkungsrohrs (9) verbunden ist, sich die obere A-Säulen-Verstärkungsplatte (103) entlang der A-Säulen-Verstärkungsplatte (101) erstreckt und sich ein hinteres Ende der oberen A-Säulen-Verstärkungsplatte (103) in die Dachseitenholm-Verstärkungsplatte (201) hinein erstreckt und mit der Dachseitenholm-Verstärkungsplatte (201) verbunden ist; und
ein oberer Abschnitt der B-Säulen-Verstärkungsplatte (601) mit einer oberen B-Säulen-Verstärkungsplatte (603) versehen ist, die fest mit einer Seite des zweiten Verstärkungsrohrs (10) verbunden ist.

7. Fahrzeugkarosserieseiten-Verstärkungsstruktur nach Anspruch 1, wobei
die C-Säule (7) einen oberen C-Säulen-Abschnitt (701) und einen unteren C-Säulen-Abschnitt (702) aufweist, die miteinander verbunden sind;
sich der obere C-Säulen-Abschnitt (701) oberhalb des C/D-Säulen-Verbindungsquerträgers (11) befindet und mit der D-Säule (3) verbunden ist und sich der untere C-Säulen-Abschnitt (702) unterhalb des C/D-Säulen-Verbindungsquerträgers (11) befindet und mit dem Hinterbodenlängsträger (4) verbunden ist.

8. Fahrzeugkarosserieseiten-Verstärkungsstruktur nach Anspruch 1, wobei
eine Außenkontur eines Querschnitts der D-Säule (3) ein geschlossener Ring ist; ein Schott (301) einstückig im Inneren der D-Säule (3) ausgebildet ist, das Schott (301) sich von einem unteren Ende der D-Säule (3) zu einem oberen Ende der D-Säule (3) erstreckt; und/oder
beide Enden der D-Säule (3) mit Schaumkleber oder Strukturkleber abgedichtet sind.

9. Fahrzeugkarosserieseiten-Verstärkungsstruktur nach Anspruch 1, wobei
ein unteres Ende der D-Säule (3) über ein Verbindungsstück (8) mit dem Hinterbodenlängsträger (4) verbunden ist und das Verbindungsstück (8) aus stranggepresstem Aluminiumprofil gefertigt ist.

10. Fahrzeugkarosserieseiten-Verstärkungsstruktur nach Anspruch 9, wobei
eine Außenseite des Hinterbodenlängsträgers (4) mit einem Überlappungsrand (403) versehen ist, der sich entlang einer Breitenrichtung eines Fahrzeugs nach außen erstreckt, der Überlappungsrand (403) nahe einem oberen Ende des Hinterbodenlängsträgers (4) angeordnet ist und eine obere Fläche des Überlappungsrands (403) über eine geneigte Übergangsfläche (404) mit einer oberen Fläche des Hinterbodenlängsträgers (4) verbunden ist.

11. Fahrzeugkarosserieseiten-Verstärkungsstruktur nach Anspruch 10, wobei
ein unteres Ende der D-Säule (3) mit einem oberen Ende des Verbindungsstücks (8) verbunden ist, ein Boden des Verbindungsstücks (8) einen ersten Verbindungsabschnitt (802), der überlappend auf der oberen Fläche des Hinterbodenlängsträgers (4) aufliegt, und einen zweiten Verbindungsabschnitt (803) aufweist, der überlappend auf einer oberen Fläche des Überlappungsrands (403) aufliegt, und eine Breite des zweiten Verbindungsabschnitts (803) in der Breitenrichtung des Fahrzeugs von oben nach unten allmählich abnimmt und eine Seite des zweiten Verbindungsabschnitts (803) überlappend auf der Übergangsfläche (404) aufliegt.

12. Fahrzeugkarosserieseiten-Verstärkungsstruktur nach einem der Ansprüche 1 bis 11, wobei
die A-Säulen-Verstärkungsplatte (101), die B-Säulen-Verstärkungsplatte (601) und die Dachseitenholm-Verstärkungsplatte (201) aus warmumgeformten Stahlplatten gefertigt sind, die C-Säule (7), der Türschwellenträger (5), die D-Säule (3) und der C/D-Säulen-Verbindungsquerträger (11) aus stranggepressten Aluminiumprofilen gefertigt sind.

13. Fahrzeug, wobei eine Karosserie des Fahrzeugs mit der Fahrzeugkarosserieseiten-Verstärkungsstruktur nach einem der Ansprüche 1 bis 12 versehen ist.

## Revendications

1. Structure de renforcement latéral de caisse de véhicule, comprenant :
un montant A (1) qui comprend une plaque de renforcement de montant A (101), un montant B (6) qui comprend une plaque de renforcement de montant B (601), un longeron latéral de pavillon (2) qui comprend une plaque de renforcement de longeron latéral de pavillon (201), une poutre de bas de caisse (5), un montant C (7), un montant D (3) et un élément transversal de connexion de montants C/D (11) ;
dans laquelle :
la plaque de renforcement de montant A (101), la plaque de renforcement de longeron latéral de pavillon (201) et le montant D (3) sont connectés en séquence dans une direction de longueur d'une caisse de véhicule, la poutre de bas de caisse (5) est connectée entre une extrémité inférieure de la plaque de renforcement de montant A (101) et une extrémité avant d'une poutre longitudinale de plancher arrière (4) et une extrémité arrière du montant D (3) est connectée à une extrémité arrière de la poutre longitudinale de plancher arrière (4) ; et
la plaque de renforcement de montant B (601) est connectée entre une partie médiane de la plaque de renforcement de longeron latéral de pavillon (201) et une partie médiane de la poutre de bas de caisse (5), le montant C (7) est connecté entre une extrémité avant du montant D (3) et une extrémité avant de la poutre longitudinale de plancher arrière (4) et l'élément transversal de connexion de montants C/D (11) est disposé dans la direction de longueur de la caisse de véhicule et est connecté entre le montant C (7) et le montant D (3) ;
dans laquelle :
la structure de renforcement latéral de caisse de véhicule comprend en outre :
une poutre de connexion de montants C/D (12) qui est réalisée à partir de profilés en aluminium extrudé, dans laquelle la poutre de connexion de montants C/D (12) est disposée dans une direction de hauteur d'une caisse de véhicule et est connectée entre le montant D (3) et l'élément transversal de connexion de montants C/D (11) ; et
une poutre de connexion de plage arrière (14) qui est réalisée à partir de profilés en aluminium extrudé, dans laquelle la poutre de connexion de plage arrière (14) est étendue suivant une direction de longueur de la caisse de véhicule, et une extrémité avant de la poutre de connexion de plage arrière (14) est connectée à la poutre de connexion de montants C/D (12) et une extrémité arrière de la poutre de connexion de plage arrière (14) est connectée au montant D (3).

2. Structure de renforcement latéral de caisse de véhicule selon la revendication 1, dans laquelle :
un premier tube de renforcement (9) est connecté à un côté interne de la plaque de renforcement de montant A (101), et le premier tube de renforcement (9) est étendu jusqu'à un côté interne de la plaque de renforcement de longeron latéral de pavillon (201) et est connecté à la plaque de renforcement de longeron latéral de pavillon (201).

3. Structure de renforcement latéral de caisse de véhicule selon la revendication 2, dans laquelle :
un second tube de renforcement (10) est connecté à un côté interne de la plaque de renforcement de montant B (601) et le second tube de renforcement (10) est étendu dans une direction de hauteur de la plaque de renforcement de montant B (601).

4. Structure de renforcement latéral de caisse de véhicule selon la revendication 3, dans laquelle :
une extrémité inférieure du premier tube de renforcement (9) est disposée à proximité d'une extrémité inférieure de la plaque de renforcement de montant A (101) et une extrémité supérieure du premier tube de renforcement (9) est disposée à proximité du montant C (7) ; et/ou
le second tube de renforcement (10) est disposé à proximité d'une extrémité supérieure de la plaque de renforcement de montant B (601).

5. Structure de renforcement latéral de caisse de véhicule selon la revendication 3, dans laquelle :
le premier tube de renforcement (9) et le second tube de renforcement (10) sont tous deux réalisés à partir d'un matériau parmi un acier formé à chaud, un alliage d'aluminium et un matériau composite renforcé de fibres ; et/ou
une section transversale au niveau de chaque position du premier tube de renforcement (9) est identique à celles des autres sections transversales ou le premier tube de renforcement (9) est divisé selon une pluralité de portions et une section transversale d'au moins une portion est différente de celles des autres portions.

6. Structure de renforcement latéral de caisse de véhicule selon la revendication 4, dans laquelle :
une partie supérieure de la plaque de renforcement de montant A (101) est munie d'une plaque de renforcement supérieure de montant A (103) qui est connectée de façon fixe à un côté du premier tube de renforcement (9), la plaque de renforcement supérieure de montant A (103) est étendue le long de la plaque de renforcement de montant A (101) et une extrémité arrière de la plaque de renforcement supérieure de montant A (103) est étendue à l'intérieur de la plaque de renforcement de longeron latéral de pavillon (201) et est connectée à la plaque de renforcement de longeron latéral de pavillon (201) ; et
une partie supérieure de la plaque de renforcement de montant B (601) est munie d'une plaque de renforcement supérieure de montant B (603) qui est connectée de façon fixe à un côté du second tube de renforcement (10).

7. Structure de renforcement latéral de caisse de véhicule selon la revendication 1, dans laquelle :
le montant C (7) comprend une partie supérieure de montant C (701) et une partie inférieure de montant C (702) qui sont connectées ; et
la partie supérieure de montant C (701) est située au-dessus de l'élément transversal de connexion de montants C/D (11) et est connectée au montant D (3) et la partie inférieure de montant C (702) est située au-dessous de l'élément transversal de connexion de montants C/D (11) et est connectée à la poutre longitudinale de plancher arrière (4).

8. Structure de renforcement latéral de caisse de véhicule selon la revendication 1, dans laquelle :
un contour externe d'une section transversale du montant D (3) présente une forme d'anneau fermé ; une cloison (301) est formée d'un seul tenant à l'intérieur du montant D (3) et la cloison (301) est étendue depuis une extrémité inférieure du montant D (3) jusqu'à une extrémité supérieure du montant D (3) ; et/ou
les deux extrémités du montant D (3) sont scellées et sont donc rendues étanches au moyen d'un adhésif sous forme de mousse ou d'un adhésif structural.

9. Structure de renforcement latéral de caisse de véhicule selon la revendication 1, dans laquelle :
une extrémité inférieure du montant D (3) est connectée à la poutre longitudinale de plancher arrière (4) par l'intermédiaire d'une pièce de connexion (8) et la pièce de connexion (8) est réalisée à partir d'un profilé en aluminium extrudé.

10. Structure de renforcement latéral de caisse de véhicule selon la revendication 9, dans laquelle :
un côté externe de la poutre longitudinale de plancher arrière (4) est muni d'un bord de recouvrement (403) qui est étendu vers l'extérieur suivant une direction de largeur d'un véhicule, le bord de recouvrement (403) est disposé à proximité d'une extrémité supérieure de la poutre longitudinale de plancher arrière (4) et une surface supérieure du bord de recouvrement (403) est connectée à une surface supérieure de la poutre longitudinale de plancher arrière (4) par l'intermédiaire d'une surface de transition inclinée (404).

11. Structure de renforcement latéral de caisse de véhicule selon la revendication 10, dans laquelle :
une extrémité inférieure du montant D (3) est connectée à une extrémité supérieure de la pièce de connexion (8), une partie inférieure de la pièce de connexion (8) comporte une première partie de connexion (802) qui est en recouvrement avec la surface supérieure de la poutre longitudinale de plancher arrière (4) et une seconde partie de connexion (803) qui est en recouvrement avec une surface supérieure du bord de recouvrement (403), et une largeur de la seconde partie de connexion (803) dans la direction de largeur du véhicule est réduite de façon progressive depuis le haut jusqu'en bas, et un côté de la seconde partie de connexion (803) est en recouvrement avec la surface de transition inclinée (404).

12. Structure de renforcement latéral de caisse de véhicule selon l'une quelconque des revendications 1 à 11, dans laquelle :
la plaque de renforcement de montant A (101), la plaque de renforcement de montant B (601) et la plaque de renforcement de longeron latéral de pavillon (201) sont réalisées à partir de tôles en acier formées à chaud, le montant C (7), et la poutre de bas de caisse (5), le montant D (3) et l'élément transversal de connexion de montants C/D (11) sont réalisés à partir de profilés en aluminium extrudé.

13. Véhicule, dans lequel une caisse du véhicule est munie de la structure de renforcement latéral de caisse de véhicule selon l'une quelconque des revendications 1 à 12.
